# FASCICULE DE BREVET EUROPEEN

(11) **EP 0 835 921 B1**
(45) Date de publication et mention de la délivrance du brevet: **12.06.2002**
(21) Numéro de dépôt: 97402176.8
(22) Date de dépôt: 18.09.1997
(51) Int. Cl.: C10L 3/10

(54) **Procédé de déshydratation et de dégazolinage d'un gaz, comportant un étage de refroidissement préliminaire**
Verfahren zur Entfernung von Wasser und Benzin aus einem Gas unter Verwendung einer Vorkühlung
Process for the removal of water and gasoline from a gas, comprising a preliminary cooling step

(30) Priorité: 24.09.1996 FR 9611693
(43) Date de publication de la demande: 15.04.1998
(73) Titulaire: INSTITUT FRANCAIS DU PETROLE, 92852 Rueil-Malmaison Cedex (FR)
(72) Inventeur: Rojey, Alexandre, 92500 Rueil Malmaison (FR); Lebas, Etienne, 92500 Rueil Malmaison (FR); Doerler, Nicole, 92000 Nanterre (FR); Larue, Joseph, 92500 Rueil Malmaison (FR)

(56) Documents cités:
- FR-A- 2 605 241
- FR-A- 2 636 857

## Description

L'invention concerne un procédé de traitement d'un gaz contenant du méthane, au moins un hydrocarbure supérieur et de l'eau dans le but d'en éliminer l'eau et / ou d'en extraire le (ou les) hydrocarbure(s) supérieur(s).

Le procédé selon l'invention permet de réaliser avantageusement les opérations de traitement d'un gaz naturel : déshydratation et séparation d'au moins une partie des hydrocarbures condensables inclus dans le gaz naturel, au sein d'un procédé intégré et optimisé.

Les produits pétroliers et notamment le gaz naturel ainsi que d'autres gaz comprenant des hydrocarbures tels que les gaz de raffinerie contiennent des produits indésirables pour leur transport et/ou leur manipulation.

Parmi ces produits, l'un des principaux constituants à éliminer est l'eau, qui se révèle être un promoteur d'hydrates et qui favorise la corrosion, en particulier lorsque le produit pétrolier contient des composés acides tels que H₂S et/ou CO₂. Les hydrates peuvent provoquer le bouchage des conduites de transport et l'action corrosive des gaz acides contenus dans un gaz naturel entraîne la détérioration des conduites et des installations de traitement et de distribution du gaz naturel, situées en aval.

Ces deux phénomènes ont des conséquences extrêmement pénalisantes, pouvant conduire à l'arrêt de production d'hydrocarbures.

Le traitement du gaz peut également comprendre une étape d'extraction des hydrocarbures supérieurs, par exemple une fraction liquide de gaz naturel (LGN) définie comme comprenant le fraction GPL et la fraction gazoline (C₅+). Cette étape a pour fonction soit d'ajuster le point de rosée hydrocarbures pour éviter la condensation d'une fraction hydrocarbure au cours du transport du gaz, soit de récupérer une fraction hydrocarbure liquide LGN, plus valorisable que le gaz traité.

Pour assurer le traitement du gaz naturel, différents procédés sont décrits dans l'art antérieur.

Dans le brevet français FR-B-2 605 241, il est déjà décrit un procédé de traitement faisant appel à un solvant physique réfrigéré et permettant de réaliser l'ensemble des opérations de traitement du gaz naturel : déshydratation, seule ou associée à l'extraction des hydrocarbures supérieurs et/ou la désacidification de ce gaz, s'il contient des composés acides.

Dans le brevet français FR-B-2 636 857, il est montré que lorsque le procédé comprend une étape de séparation des hydrocarbures supérieurs (LGN), la récupération du solvant peut être améliorée par la mise en oeuvre d'une étape de lavage des hydrocarbures liquides par l'eau issue de la déshydratation du gaz.

Des applications d'un tel procédé sont discutées par exemple dans la publication "IFPEXOL for Environmentally Sound Gas Processing" de J. Larue, A. Minkkinen et S. Patel, presentée à la 71^{ème} Convention du "GPA", en Mars 1992 à Anaheim en Californie (USA).

La publication "Integrated Natural Gas Treatment : Gained Industrial Experience with IFPEXOL Process" de S. Patel, A. Minkkinen, J. Larue et J.F. Levier presentée à l'IGCR 95 à Cannes (France) en Novembre 1995, décrit notamment la façon de laver à l'eau la phase d'hydrocarbure liquide afin de récupérer au moins en partie le solvant qu'elle contient.

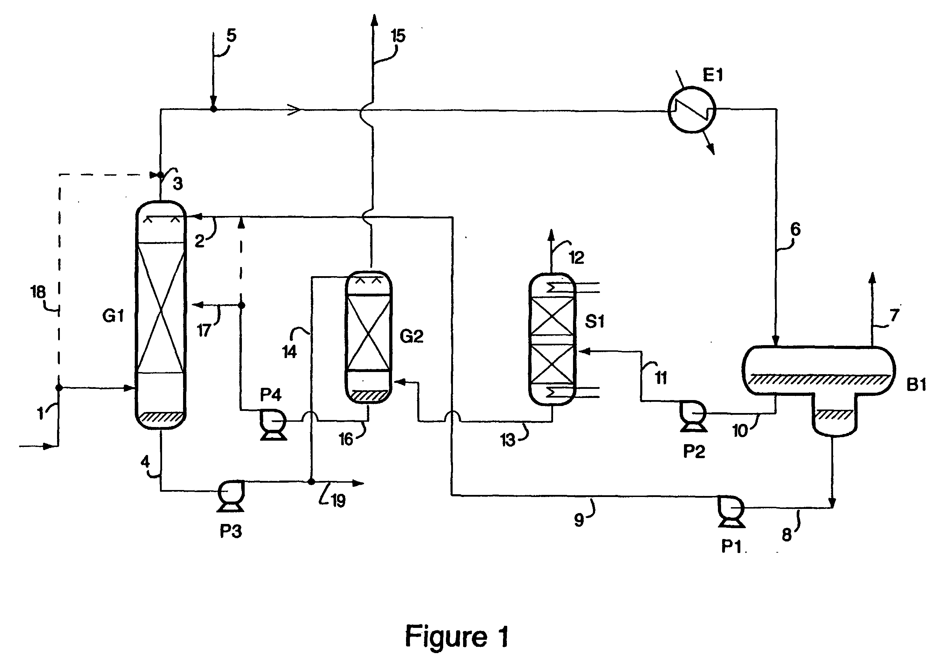

La Figure 1 illustre le procédé tel que décrit dans l'art antérieur, lorsque le gaz à traiter contient du méthane, de l'eau, au moins un hydrocarbure condensable, et éventuellement des composés acides. Le procédé selon l'art antérieur est alors décrit comme suit.

Le gaz naturel à traiter arrive par le conduit 1. Une fraction ou la totalité de ce gaz est mise en contact, dans la zone de contact G1, formée par exemple par un garnissage, avec un mélange de solvant et d'eau provenant du conduit 2.

Le solvant utilisé peut être choisi parmi le méthanol, l'éthanol, le propanol, le méthylpropyléther, l'éthylpropyléther, le dipropyléther, le méthyltertiobutyléther, le diméthoxyméthane, le diméthoxyéthane et le méthoxyéthanol.Le solvant préférentiellement utilisé est le méthanol.

Une phase gazeuse chargée de solvant, est évacuée en tête par le conduit 3. En fond, on soutire par le conduit 4 une phase aqueuse substantiellement débarrassée de solvant.

Il est à noter que le procédé de traitement peut être optimisé en adaptant la fraction de gaz devant passer dans la zone de contact G1 et la fraction de gaz passant en dehors de cette zone de contact en fonction de la composition du gaz à traiter et des performances requises. Cette option, représentée en pointillé sur la Figure 1, permet à une partie du gaz à traiter, passant par le conduit 18, d'être directement mélangée au gaz sortant de la zone de contact par le conduit 3. La fraction de gaz ne passant pas dans la zone de contact peut être comprise, par exemple, entre 0 et 50 % de la quantité de gaz à traiter.

La phase gazeuse de tête, contenant de l'eau et du solvant, est le plus souvent proche de la saturation. Elle est refroidie dans l'échangeur E1 par un fluide frigorigène, de manière à provoquer la condensation d'une phase aqueuse contenant du solvant et d'une phase hydrocarbure liquide. Il a été montré que le solvant entraîné en phase gazeuse à la sortie de la zone de contact G1 peut suffire à éviter les problèmes de formation d'hydrates liés à l'étape de refroidissement E1. Un appoint peut être apporté au procédé par le conduit 5 pour compenser les pertes de solvant dans le gaz traité, dans la fraction hydrocarbure liquide (LGN) et éventuellement dans l'eau rejetée par le conduit 19. Par ce conduit 19, un courant de purge peut être établi pour maintenir constantes les quantités de solvant et d'eau présentes dans l'ensemble du circuit.

Le mélange de phases gazeuse et liquides ainsi obtenu sort de l'échangeur E1 par le conduit 6. Les deux phases liquides et la phase gazeuse sont séparées dans un ballon B1.

Le gaz traité déshydraté est évacué de ce ballon par le conduit 7. Les deux phases liquides issues de la condensation se séparent par décantation dans le ballon B1.

La phase aqueuse formée essentiellement d'eau et de solvant sort du ballon B1 par le conduit 8. Une pompe P1 permet de réinjecter ladite phase aqueuse par le conduit 9 dans le conduit 2, puis dans la zone de contact G1.

La phase hydrocarbure, formée essentiellement des hydrocarbures condensables du gaz naturel (C₃+) (contenant éventuellement de l'éthane et du méthane dissous) et de solvant, peut être évacuée vers un circuit de stabilisation et de lavage par le conduit 10. À ce stade du procédé, un échange de chaleur entre le gaz issu de la zone de contact G1 et la phase hydrocarbure évacuée par le conduit 10 peut être envisagé. II n'a pas été représenté sur la Figure 1. Une pompe P2 permet d'envoyer la phase hydrocarbure liquide par le conduit 11 dans une colonne de stabilisation S1. Le but de cette opération est de séparer de ladite phase hydrocarbure liquide les composants les plus volatils (C₁ et C₂), qui sont évacués hors du procédé par le conduit 12. La phase hydrocarbure contenant les constituants de masse molaire supérieure à C₂ est envoyée, par le conduit 13, dans une zone de lavage à l'eau G2 afin d'éliminer le solvant qu'elle contient.

La phase aqueuse, évacuée de la zone de contact G1 par le conduit 4 et débarrassée au moins en partie du solvant, est reprise par une pompe P3. Une fraction de cette phase aqueuse dont le débit est contrôlé est envoyée dans la zone de contact G2 par le conduit 14. L'autre fraction est évacuée par le conduit 19.

Dans cette zone de contact G2, la fraction de la phase aqueuse arrivant par le conduit 14 permet d'assurer le lavage de la phase hydrocarbure. Le solvant ayant plus d'affinité pour l'eau que pour la phase hydrocarbure est récupéré au moins en partie dans la phase aqueuse à l'issue de cette étape.

La phase hydrocarbure liquide, débarrassée de la majeure partie du solvant qu'elle contenait à l'entrée de la zone de contact G2, est évacuée par le conduit 15.

La phase aqueuse contenant du solvant est évacuée de la zone de contact G2 par le conduit 16. Cette phase est reprise par la pompe P4 et injectée dans la zone de contact G1. Selon sa concentration en solvant, cette phase est injectée dans la zone de contact G1 par le conduit 17, ou injectée dans le conduit 2, afin d'être mélangée à la phase aqueuse arrivant du ballon B1 par le conduit 9.

Ce procédé présente des avantages importants par rapport aux techniques antérieures. Il permet un gain significatif en investissement ainsi qu'en encombrement et poids des installations, ce qui peut être particulièrement avantageux dans un contexte de production d'hydrocarbures en mer. En outre, la séparation de l'eau et du solvant par le contact avec le gaz à traiter permet d'éviter d'avoir à réaliser une séparation par distillation.

Il est apparu néanmoins possible d'aboutir à des gains supplémentaires en investissements, encombrement et poids et en frais opératoires liés au traitement du gaz, en opérant selon le procédé de l'invention.

Le procédé et l'installation selon l'invention sont avantageusement utilisés pour déshydrater un gaz tel que le gaz naturel comportant de l'eau et au moins un hydrocarbure supérieur, ainsi que pour obtenir une séparation au moins partielle des hydrocarbures condensables.

Le principe du procédé selon l'invention est que le gaz à traiter est divisé en au moins deux fractions (1) et (2) :
- la fraction (1) est refroidie en l'absence de solvant jusqu'à une température proche mais supérieure à la température de formation des hydrates, ce qui permet d'évacuer une large partie des fractions condensables ; et
- la fraction (2) est mise en contact avec une phase aqueuse comprenant du solvant provenant d'une deuxième étape de réfrigération en présence de solvant.

Cette étape de contact permet d'obtenir d'une part une phase aqueuse au moins en partie débarrassée de solvant et d'autre part une phase gazeuse qui contient du solvant, ce qui permet de refroidir le gaz jusqu'à une température plus basse que la température atteinte au cours de la première étape de refroidissement de la fraction (1), en réalisant les spécifications requises pour le gaz.

Le procédé de l'invention est caractérisé en ce qu'il comprend les étapes suivantes :
- a) On divise le gaz à traiter en deux fractions (1) et (2).
- b) On refroidit ladite fraction (1), ce refroidissement induisant la condensation d'une phase liquide aqueuse et d'une phase liquide d'hydrocarbures supérieurs.
- c) On sépare les phases issues de l'étape de refroidissement (b).
- d) On met en contact ladite fraction (2) de gaz à traiter issue de l'étape de séparation (a) avec une phase aqueuse comprenant un solvant dans une zone de contact, le solvant contenu dans la phase aqueuse étant extrait par le gaz qui, à l'issue de ladite étape (d), est chargé en solvant. et la phase aqueuse débarrassée au moins en partie du solvant étant évacuée à la base de la zone de contact.
- e) On fournit au système un appoint en solvant.
- f) On réfrigère les fractions gazeuses issues des étapes (c) et (d) en présence du solvant, séparément ou en mélange au moins partiel, de manière à condenser partiellement une phase aqueuse comprenant du solvant ainsi qu'une phase hydrocarbure liquide.
- g) On sépare le gaz traité, débarrassé au moins en partie de l'eau ainsi que des hydrocarbures supérieurs qu'il contenait, les phases aqueuse et la phase hydrocarbure liquide issues de l'étape de réfrigération (f).
- h) On recycle au moins en partie la phase aqueuse comprenant du solvant à l'issue de l'étape (g) à l'étape de contact (d).

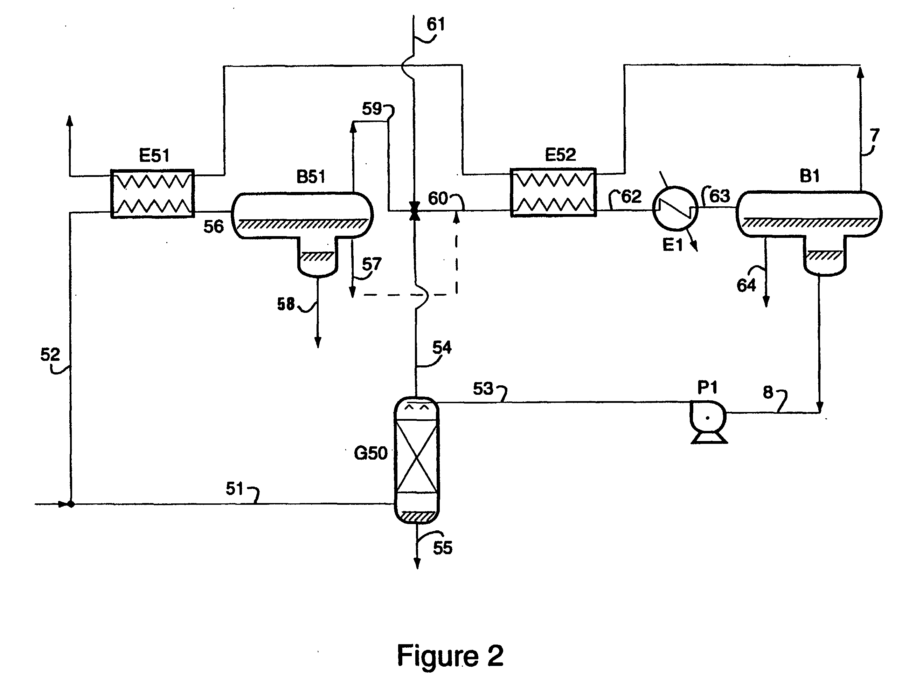

Le procédé de l'invention sera décrit plus précisément ci-après, en relation avec l'exemple de réalisation représenté sur la Figure 2.

Le gaz à traiter est divisé en deux fractions passant par les conduits 51 et 52.

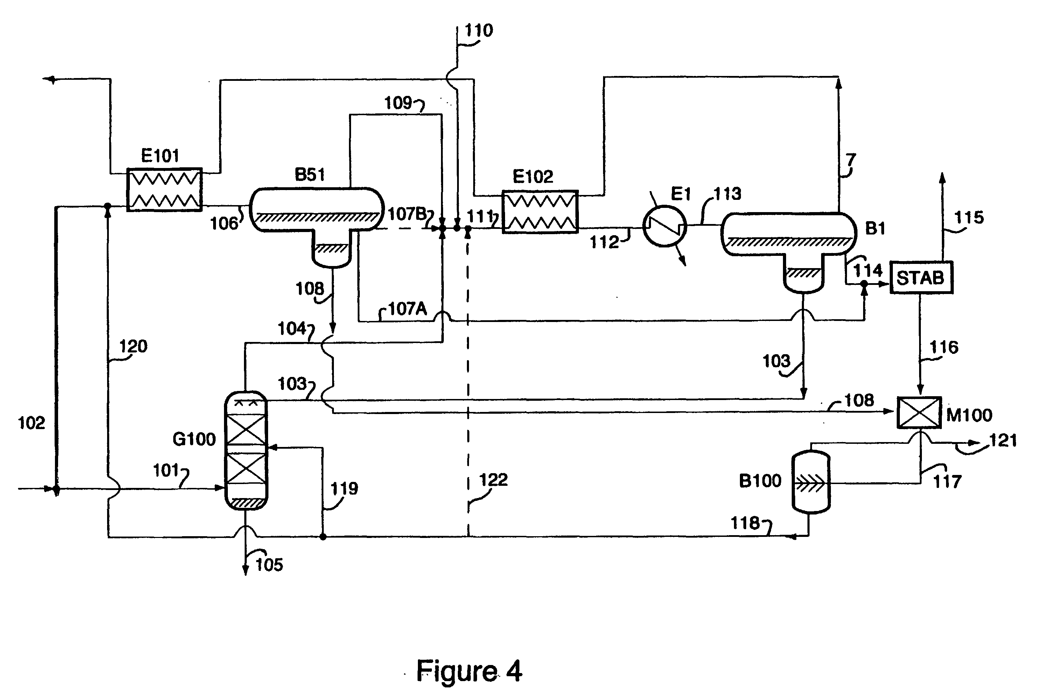

Une première fraction du gaz, passant par le conduit 52, est refroidie par un échangeur de chaleur E51. À la sortie de cet échangeur, la température du gaz est proche mais supérieure à la température de formation des hydrates dans le gaz à traiter. Le fluide de refroidissement utilisé dans cet échangeur peut être un fluide de refroidissement disponible sur l'installation, par exemple, de l'air ou de l'eau, ou encore la totalité ou une partie du gaz traité issu du ballon froid B1 par le conduit 7 et à travers l'échangeur E52. Le fluide partiellement condensé ainsi obtenu est envoyé dans un ballon de séparation triphasique B51. L'eau et la phase hydrocarbure liquide condensées au cours de l'étape de refroidissement E51 sont séparées par décantation dans le ballon B51. Il est à noter que ces deux fluides sont exempts de solvant. La fraction hydrocarbure liquide est évacuée du procédé par le conduit 57, soit pour être valorisée, soit pour être réinjectée en amont de l'échangeur E52, suivant la ligne indiquée en pointillés. La phase aqueuse obtenue, qui ne contient pas de solvant, est évacuée du procédé par le conduit 58. Elle peut être avantageusement utilisée pour une phase ultérieure de lavage de la phase liquide hydrocarbure polluée par du solvant, comme cela est décrit dans l'exemple de réalisation représenté sur la Figure 4.

Une deuxième fraction du gaz, passant par le conduit 51, est envoyée au fond de la zone de contact G50, dans laquelle il permet d'extraire au moins en partie le solvant contenu dans la phase aqueuse envoyée par le conduit 53 en tête de la zone de contact G50. La phase aqueuse débarrassée au moins en partie du solvant qu'elle contenait est évacuée au fond de la zone de contact G50 par le conduit 55 et le gaz chargé en solvant est évacué en tête de la zone de contact G50 par le conduit 54.

Le gaz arrivant du ballon triphasique B51 par le conduit 59 est mélangé au gaz chargé de solvant arrivant de la zone de contact par le conduit 54. Un appoint de solvant est ajouté dans le procédé par le conduit 61. La quantité de cet appoint est contrôlée pour obtenir une concentration dans le gaz telle que tout risque lié à la formation d'hydrates soit évité au cours des étapes de réfrigération ultérieures, en compensant les pertes de solvant dans le gaz traité et dans les fractions liquides.

Le mélange gazeux chargé en solvant ainsi obtenu est envoyé par le conduit 60 dans l'échangeur de chaleur E52, dans lequel il est réfrigéré par échange de chaleur avec le gaz traité. La réfrigération est alors poursuivie dans l'échangeur E1 à l'aide d'un fluide frigorigène, de manière à obtenir la condensation des fractions d'eau et d'hydrocarbures requises par les spécifications du procédé.

Les phases liquides et gazeuse sortant de l'échangeur E1 par le conduit 63 sont séparées par décantation dans un ballon B1.

Le gaz traité déshydraté est évacué par le conduit 7. La phase hydrocarbure liquide est évacuée du procédé par le conduit 64. Elle peut être soumise à des étapes de stabilisation et / ou de lavage, comme décrit dans l'exemple de réalisation représenté sur la Figure 4. La phase liquide aqueuse contenant du solvant est évacuée du ballon B1 par le conduit 8, puis recyclée par la pompe P1 et le conduit 53 en tête de la zone de contact G50.

Le procédé de l'invention présente notamment l'avantage de pouvoir opérer avec une colonne de contact entre la phase aqueuse comprenant du solvant et la fraction de gaz qui est envoyée pour extraire le solvant, de dimension très réduite, en n'utilisant qu'une fraction réduite du gaz à traiter, généralement inférieure à 50 %, et pouvant être par exemple inférieure à 30 %.

Le solvant mis en jeu dans le procédé de l'invention doit être au moins partiellement miscible avec l'eau pour avoir un effet inhibiteur sur la formation de glace et / ou d'hydrates. Pour pouvoir être facilement extrait d'une solution aqueuse par contact avec le gaz à traiter, il doit avoir une température d'ébullition peu élevée de préférence inférieure à la température d'ébullition de l'eau ou former avec l'eau un azéotrope ayant une température d'ébullition peu élevée.

Ce solvant peut être par exemple un alcool, tel que le méthanol, l'éthanol ou le propanol, un éther tel que le méthylpropyléther, le dipropyléther, le méthyltertiobutyléther, une cétone, ou encore par exemple le diméthoxyméthane, le diméthoxyéthane ou le méthoxyéthanol, cette liste étant donnée à titre non limitatif.

La température à l'issue de l'étape (f) est généralement comprise dans le procédé selon l'invention entre - 5 et - 100°C. Plus cette température est basse, plus la concentration en solvant dans la phase aqueuse issue de l'étape (g) et recyclée à l'étape (d) doit être élevée. Cette concentration est généralement comprise dans le procédé selon l'invention entre 40 et 90 % en fraction poids.

La fraction de gaz (2) traversant la zone de contact au cours de l'étape (d) représente de préférence de 10 à 50 % de la totalité du gaz à traiter.

Au cours de l'étape (g) le gaz peut être réfrigéré soit à l'aide d'un cycle frigorigène externe soit par détente à travers une vanne ou une turbine.

La température à l'issue de l'étape de réfrigération (b) est de préférence comprise entre + 5 et + 30°C. Cette étape de réfrigération peut être assurée par exemple soit par échange de chaleur avec le gaz traité soit par échange de chaleur avec un fluide de réfrigération externe, par exemple de l'eau ou de l'air ou encore si cela est nécessaire par échange de chaleur avec un fluide frigorigène circulant dans un cycle extérieur.

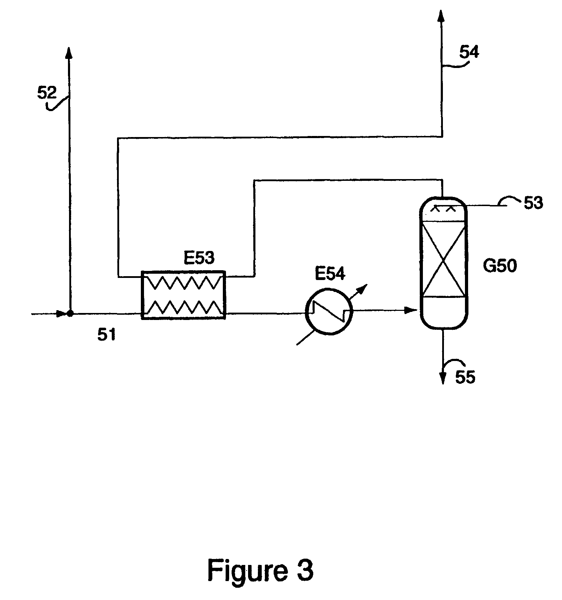

La fraction de gaz (2) qui est envoyée à la zone de contact au cours de l'étape (d) peut être chauffée au préalable, pour extraire plus facilement le solvant de la phase aqueuse envoyée en tête de la zone de contact au cours de l'étape (d). On peut opérer par exemple selon le schéma de la Figure 3.

La fraction de la charge qui est envoyée vers la zone de contact G50 par le conduit 51 est au préalable chauffé dans l'échangeur de chaleur E53 à l'aide du gaz sortant de la zone de contact G50 puis dans l'échangeur de chaleur E54 à l'aide d'un fluide externe qui peut être par exemple un gaz chaud ou de la vapeur d'eau.

La température à l'issue de cette étape de chauffage peut être comprise par exemple entre 80 et 150°C. Une telle disposition est particulièrement avantageuse quand le solvant utilisé est plus lourd que le méthanol, par exemple lorsqu'il s'agit d'éthanol.

La phase aqueuse qui est récupérée à l'issue de l'étape (c) du procédé peut être avantageusement utilisée pour laver la phase hydrocarbure liquide contenant du méthanol récupérée à l'issue de l'étape (g) du procédé. Un exemple de réalisation dans un tel cas est illustré par la Figure 4.

Le gaz à traiter est divisé en deux fractions (1) et (2). La fraction (2) passant par le conduit 101 est injectée en fond d'une zone de contact G100. Une solution aqueuse contenant du solvant est recyclée par le conduit 103 en tête de cette zone de contact, alors qu'une fraction de la solution aqueuse chargée en solvant issue du lavage des condensats, est envoyée latéralement dans la colonne par le conduit 119. Cette fraction de solution aqueuse est ajustée de façon à ce que le débit de solution aqueuse très pauvre en solvant évacuée de la partie basse de la zone de contact par le conduit 105 corresponde approximativement à la quantité d'eau devant être éliminée du gaz à traiter.

La fraction (1) de gaz circulant par le conduit 102, est mélangée au complément de la solution aqueuse chargée en solvant issue du lavage des condensats par le conduit 118 et le conduit 120. Le mélange est envoyé dans l'échangeur de chaleur E101, où il est porté à une température proche mais supérieure à la température de formation des hydrates.

Le mélange partiellement condensé sortant de l'échangeur par le conduit 106 est envoyé dans le ballon de séparation triphasique B51. La phase aqueuse et la phase hydrocarbure liquide condensées au cours de l'étape de refroidissement E101 sont séparées par décantation dans le ballon B51. La phase aqueuse faiblement chargée en solvant évacuée du ballon B51 par le conduit 108 est envoyée dans un mélangeur statique M100 permettant le lavage de la phase hydrocarbure liquide polluée par le solvant. Le gaz évacué du ballon triphasique B51 par le conduit 109 est mélangé au gaz chargé de solvant issu de la zone de contact par le conduit 104.

La phase liquide constituée d'hydrocarbures issue du ballon triphasique B51 est évacuée du procédé par le conduit 107A et envoyée à l'étape de stabilisation. Elle peut également être réinjectée dans le procédé en amont de l'échangeur de chaleur E102, comme indiqué en pointillés, par le conduit 107B.

Le mélange ainsi obtenu dans le conduit 111 est envoyé dans l'échangeur de chaleur E102, dans lequel il est refroidi par échange avec le gaz traité. Il est ensuite réfrigéré par un fluide frigorigène dans l'échangeur E1, de manière à provoquer la condensation d'une fraction aqueuse, et d'une fraction hydrocarbure liquide.

Les phases liquides et gazeuse sortant de l'échangeur E1 par le conduit 113, sont séparées dans un ballon B1.

Le gaz traité est évacué de ce ballon par le conduit 7. Comme représenté à la Figure 4, ce gaz peut être utilisé comme fluide de refroidissement dans les échangeurs E102 et E101 avant d'être évacué du procédé. Les deux phases liquides issues de la condensation opérées dans l'échangeur E1 sont séparées par décantation dans le ballon B1. La phase hydrocarbure liquide condensée sortant du ballon B1 par le conduit 114 est stabilisée. Le but de cette opération est de séparer de la phase d'hydrocarbures les composants les plus volatils (C₁ et C₂), qui sont évacués du procédé par le conduit 115. La phase hydrocarbure liquide contenant les composants supérieurs à C₂ est envoyée, par le conduit 116, dans le mélangeur M100, où elle est mise en contact avec la phase aqueuse faiblement chargée en solvant issue du ballon de séparation B51 par le conduit 108. Le solvant, qui est préférentiellement soluble dans l'eau, passe au cours de cette étape en majeure partie de la phase hydrocarbure à la phase aqueuse. Le mélange des deux phases est envoyé par le conduit 117 à un ballon séparateur diphasique B100, d'où sont évacuées après décantation, par le conduit 121 une phase hydrocarbure liquide stabilisée et lavée pouvant être valorisée, et par le conduit 118, une phase aqueuse chargée en solvant. Cette phase aqueuse est pour une part envoyée en amont de l'échangeur E101 par le conduit 120, pour l'autre part envoyée en un point intermédiaire de la zone de contact G100, par le conduit 119. Les débits relatifs passant par les conduits 119 et 120 sont ajustés de façon à maintenir constantes les quantités d'eau et de solvant circulant dans le procédé.

D'autres agencements peuvent être adoptés sans sortir du cadre de la présente invention.

Il est possible notamment d'envoyer la phase aqueuse issue de l'étape de lavage de la phase hydrocarbure liquide en totalité ou en partie en amont de la deuxième étape de réfrigération, comme cela est représenté sur la Figure 4, dans laquelle le conduit 122, indiqué en pointillés permet d'envoyer la phase aqueuse issue du ballon B100 en amont de l'échangeur E102.

Le lavage de la phase hydrocarbure liquide au moyen de la phase aqueuse peut être effectué dans un mélangeur unique suivi d'un décanteur. Il peut être également effectué dans une colonne opérant à contre courant, qui peut être par exemple une colonne à garnissage. Différents types de garnissage peuvent être utilisés, par exemple un garnissage structuré.

Le contact réalisé au cours de l'étape (d) entre la fraction (2) du gaz à traiter et la phase aqueuse peut être également réalisé dans différentes colonne, par exemple une colonne à plateaux ou une colonne à garnissage. Dans le cas où une colonne à garnissage est utilisée, un garnissage structuré peut être employé.

Les échangeurs de chaleur utilisés dans le procédé peuvent être de différents types, soit par exemple de type tubes et calandre, soit de type échangeurs à plaques, par exemple échangeur à plaques en aluminium brasé.

Les avantages du procédé de l'invention, décrit en relation avec la Figure 2, sont illustrés par l'exemple numérique 1. L'exemple numérique 2 permet de mieux préciser les conditions de fonctionnement du procédé dans le cas d'un lavage de la phase hydrocarbure liquide. Cet exemple est décrit en relation avec la Figure 4.

### EXEMPLE 1.

Un gaz naturel est produit sur site, sa pression est de 5 MPa et sa température de 67°C, sa composition est donnée dans le tableau 1 et il est saturé en eau (teneur en eau à l'entrée du procédé environ 6000 ppm mole). Son débit est de 380 tonnes/h, ce qui correspond à une production de environ 10 MNm3/jour.

**Tableau 1**

| Composition | % poids |
|---|---|
| N2 | 0,8 |
| CO2 | 7,6 |
| Méthane | 62,7 |
| Éthane | 10,5 |
| Propane | 5,6 |
| Butane | 3,3 |
| Pentane | 6,8 |
| C6+ | 2,7 |

Dans cet exemple, le solvant utilisé est le méthanol.

90 % du gaz produit est envoyé par le conduit 52 vers l'échangeur E51. Au sortir de cet échangeur, dans le conduit 56, la température du gaz partiellement condensé est de 20°C.

Trois phases sortent du ballon de séparation B51 :
- un débit de 335,60 tonnes/h de gaz avec une teneur résiduelle en eau de 560 ppm mole,
- un débit de 1,68 tonnes/h d'eau qui peut être soit évacué du procédé, soit utilisé pour le relavage de la phase hydrocarbure condensée issue du ballon B1. Ce débit représente approximativement 80 % de l'eau contenue dans le gaz à traiter et
- 6,60 tonnes/h de phase hydrocarbure condensée (LGN) exempte de méthanol, qui peut éventuellement être stabilisée avant d'être évacuée du procédé pour valorisation ou être réinjectée dans le procédé en amont de l'échangeur E52.

La fraction restante de gaz produit (10 %) est injectée dans la zone de contact G50 par le conduit 51. Le contacteur G50 contient un garnissage structuré. Une solution aqueuse de méthanol recyclée est injectée en tête du contacteur par le conduit 53, à une température de - 35°C. À l'issue de l'étape de contact, une solution aqueuse appauvrie en solvant est issue du contacteur par le conduit 55. Cette solution contient 136 ppm poids de solvant. Le débit total de phase aqueuse évacué par les conduits 58 et 55 (environ 2 tonnes/h) correspond approximativement à la quantité d'eau initialement contenue dans les 380 tonnes/h de gaz à traiter.

Le gaz sortant en tête du garnissage par le conduit 54 s'est chargé en solvant au contact de la solution aqueuse. Il contient 1,20 % poids de solvant. Ce gaz est mélangé au gaz issu du ballon B51 et reçoit un appoint de méthanol de 175 kg/heure avant d'être envoyé dans les échangeurs E52 et E1. Cet appoint est ajusté de façon à éviter tout risque lié à la formation d'hydrate.

Après l'échangeur E1 la température est de -35°C. Le ballon B1 permet de séparer trois phases:
- un débit de 315 tonnes/h de gaz traité, contenant une teneur résiduelle en eau de 5,13 ppm mole. Ce gaz peut éventuellement être utilisé comme fluide de refroidissement pour les échangeurs E22 et E21 avant d'être envoyé dans un réseau de distribution,
- un débit de 1 tonnes/h de phase aqueuse chargée de solvant, qui est recyclé vers la zone de contact G50 et
- un débit de 52,6 tonnes/h de phase hydrocarbure condensée qui peut éventuellement être stabilisée puis lavée afin d'être débarrassée du solvant qu'elle contient (2,5 % poids), avant valorisation.

Cet exemple montre que l'utilisation du procédé selon l'invention permet d'obtenir des performances équivalentes à celles obtenues le procédé selon l'art antérieur en divisant par un facteur supérieur à 5 la fraction de gaz à traiter devant être contactée avec une solution chargée de solvant. De ce fait, la taille, le poids et le coût du contacteur qui sont facteurs prépondérants pour ce type de procédé sont réduits d'autant.

### EXEMPLE 2.

Le gaz naturel est produit sur site dans les conditions de pression, température, débit et composition décrites dans l'exemple 1. Dans cet exemple encore le solvant utilisé est le méthanol.

Dans cet exemple 55 % du gaz produit est mélangé dans le conduit 102 à une fraction de la phase aqueuse chargée de solvant provenant du lavage des condensats est évacuée par le conduit 118. Le mélange est envoyé dans l'échangeur E101. Au sortir de cet échangeur, dans le conduit 106, la température du gaz partiellement condensé est de 20°C. Trois phases sortent du ballon de séparation B51 :
- un débit de 242,40 tonnes/h de gaz contenant une teneur résiduelle en eau de 600 ppm mole, qui est évacué par le conduit 109,
- un débit de 1,75 tonnes/h d'eau faiblement chargé en solvant (7% poids) qui est utilisée pour le lavage de la phase hydrocarbure condensée issue du ballon B1 et
- un débit de 4,70 tonnes/h de phase hydrocarbure condensée, qui peut éventuellement être recyclée (par le conduit 107B) ou être évacuée vers la colonne de stabilisation (par le conduit 107A).

La fraction restante de gaz produit (45 %) est injectée dans la zone de contact G100 par le conduit 101. Le contacteur G100, contient un garnissage structuré. Une solution aqueuse de solvant réfrigérée, évacuée du ballon B1, est envoyée en tête du contacteur par le conduit 103 et une fraction de la solution aqueuse provenant du lavage des condensats par le conduit 119 est envoyée latéralement. À l'issue de l'étape de contact, une solution aqueuse appauvrie en solvant est issue du contacteur par le conduit 105. Cette solution contient 140 ppm poids de solvant. Le débit de phase aqueuse évacué de la zone de contact, soit environ 2 tonnes/h, correspond approximativement à la quantité d'eau initialement contenue dans les 380 tonnes/h de gaz à traiter

Le gaz sortant en tête du garnissage par le conduit 104 s'est chargé en solvant au contact des solutions aqueuses. Il est mélangé au gaz issu du ballon B51 et reçoit un appoint de solvant de 50 kg/heure avant d'être envoyé dans les échangeurs E22 et E1. Cet appoint est ajusté de façon à éviter tout risque lié à la formation d'hydrates.

Après l'échangeur E1 la température est de -35°C. Le ballon B1 permet de séparer trois phases:
- un débit de 320 tonnes/h de gaz traité, contenant une teneur résiduelle en eau de 5,13 ppm mole. Ce gaz peut éventuellement être utilisé comme fluide de refroidissement pour les échangeurs E22 et E21 avant d'être envoyé dans un réseau de distribution,
- un débit de 1 tonnes/h de phase aqueuse chargée de solvant, recyclé pour une part vers la zone de contact G100, pour l'autre part en amont de l'échangeur E101 et
- un débit de 55,4 tonnes/h de phase hydrocarbure condensée qui est mélangé au débit de condensat issu du ballon B51 avant d'être stabilisé. Lors de l'étape de stabilisation, la majeure partie du méthane et de l'éthane contenus dans les condensats est éliminée. Un débit de 50,60 tonnes/h de condensats stabilisés est mélangé à l'eau faiblement chargée en solvant évacuée du ballon B51, dans le mélangeur M100.

Après décantation dans le ballon B100, on récupère deux phases :
- les condensats lavés ayant une teneur résiduelle de 700 ppm poids en solvant et
- une phase aqueuse chargée en solvant recyclée comme décrit précédemment.

Cet exemple montre que la réalisation des opérations de déshydratation, dégazolinage par solvant réfrigéré et lavage des condensats peut être réalisé en utilisant le procédé selon l'invention en ne contactant que 45 % du gaz produit. Comme pour l'exemple 1, la taille, le poids et le coût du contacteur, qui sont facteurs prépondérants pour ce type de procédé, sont réduits de façon significative ; de plus la consommation en solvant est sensiblement diminuée.

## Revendications

1. Procédé de traitement d'un gaz contenant du méthane, de l'eau, ainsi qu'au moins un hydrocarbure plus lourd que le méthane, dans le but de débarrasser au moins en partie le gaz de l'eau ainsi que des hydrocarbures plus lourds que le méthane, **caractérisé par** ce qu'il comprend les étapes suivantes :
a) on divise le gaz à traiter en deux fractions (1) et (2) ;
b) on refroidit ladite fraction (1), ce refroidissement induisant la condensation d'une phase liquide aqueuse et d'une phase liquide d'hydrocarbures supérieurs ;
c) on sépare les phases issues de l'étape de refroidissement (b) ;
d) on met en contact ladite fraction (2) de gaz à traiter issue de l'étape de séparation (a) avec une phase aqueuse comprenant un solvant dans une zone de contact, le solvant contenu dans la phase aqueuse est extrait par le gaz qui, à l'issue de ladite étape (d), est chargé en solvant et la phase aqueuse débarrassée au moins en partie du solvant est évacuée à la base de la zone de contact ;
e) on fournit au système un appoint en solvant ;
f) on réfrigère les fractions gazeuses issues des étapes (c) et (d) en présence du solvant, séparément ou en mélange au moins partiel, de manière à condenser partiellement une phase aqueuse comprenant du solvant ainsi qu'une phase hydrocarbure liquide ;
g) on sépare le gaz traité, débarrassé au moins en partie de l'eau ainsi que des hydrocarbures supérieurs qu'il contenait, les phases aqueuse et la phase hydrocarbure liquide issues de l'étape de réfrigération (f) ;
h) on recycle au moins en partie la phase aqueuse comprenant du solvant à l'issue de l'étape (g) à l'étape de contact (d).

2. Procédé selon la revendication 1, **caractérisé en ce que** la phase hydrocarbure liquide provenant de l'étape (g) est mise en contact avec une phase aqueuse provenant au moins en partie de l'étape (c), afin d'éliminer au moins en partie le solvant qu'elle contient.

3. Procédé selon la revendication 2, **caractérisé en ce que** la phase aqueuse contenant du solvant issue de l'étape de contact est recyclée à l'entrée de l'étape de refroidissement (b) et / ou de l'étape de contact (d).

4. Procédé selon l'une des revendications 1 à 3, **caractérisé en ce que** le lavage de la phase liquide d'hydrocarbures issue de l'étape (f) est réalisé après une étape de stabilisation qui permet d'éliminer les composés volatils qu'elle contient.

5. Procédé selon l'une des revendications 1 à 4, **caractérisé en ce que** le solvant est choisi parmi le méthanol, l'éthanol, le propanol, le méthylpropyléther, l'éthylpropyléther, le dipropyléther, le méthyltertiobutyléther, le diméthoxyméthane, le diméthoxyéthane et le méthoxyéthanol.

6. Procédé selon l'une des revendications 1 à 5, **caractérisé en ce que** le solvant est le méthanol.

7. Procédé selon l'une des revendications 1 à 6, **caractérisé en ce que** la phase aqueuse recyclé envoyée à l'étape (d) contient de 40 à 90 % poids de solvant.

8. Procédé selon l'une des revendications 1 à 7, **caractérisé en ce que** la température de la phase gazeuse, à l'issue de l'étape (g) est comprise entre - 5 et - 100 °C.

9. Procédé selon l'une des revendications 1 à 8, **caractérisé en ce que** la fraction de gaz traversant la zone de contact de l'étape (d) représente de 10 à 50 % de la totalité du gaz.

10. Procédé selon les revendications 1 à 9, **caractérisé en ce qu'**il comprend en outre une étape de lavage de la phase hydrocarbure liquide afin d'en récupérer le solvant.

11. Procédé selon la revendication 10, **caractérisé en ce que** ladite étape de lavage est réalisée par la mise en oeuvre de mélangeurs décanteurs.

12. Procédé selon la revendication 10, **caractérisé en ce que** ladite étape de lavage est réalisée par contact dans une colonne.

13. Procédé selon les revendications 1 à 12, **caractérisé en ce que** la fraction (2) envoyée à la zone de contact avec la phase aqueuse provenant de l'étape (h) est préalablement chauffée.

## Claims

1. A process for the treatment of a gas containing methane, water and at least one hydrocarbon which is higher than methane, to free the gas at least partially from the water and hydrocarbons which are heavier than methane, **characterized in that** it comprises the following steps:
a) dividing the gas to be treated into two fractions (1) and (2);
b) cooling said fraction (1), inducing condensation of an aqueous liquid phase and a higher hydrocarbon liquid phase;
c) separating the phases from cooling step (b);
d) bringing said fraction (2) of the gas to be treated from separation step (a) into contact with an aqueous phase comprising a solvent, in a contact zone, the solvent contained in the aqueous phase being extracted by the gas which, at the end of said step (d), is charged with solvent, and the aqueous phase which is at least partially free of solvent being evacuated at the bottom of the contact zone;
e) providing a solvent makeup system;
f) cooling the gas fractions from steps (c) and (d) in the presence of a solvent, either separately or mixed at least in part, to partially condense an aqueous phase comprising solvent and a liquid hydrocarbon phase;
g) separating the treated gas, at least partially free of the water and of the heavier hydrocarbons it contained, the aqueous phases and the liquid hydrocarbon phase from cooling step (f);
h) recycling at least part of the aqueous phase comprising solvent from the end of step (g) to contact step (d).

2. A process according to claim 1, **characterized in that** the liquid hydrocarbon phase from step (g) is brought into contact with an aqueous phase which originates at least in part from step (c), to eliminate at least part of the solvent it contains.

3. A process according to claim 2, **characterized in that** the aqueous phase containing solvent from the contact step is recycled to the inlet to the cooling step (b) and/or the contact step (d).

4. A process according to any one of claims 1 to 3, **characterized in that** the liquid hydrocarbon phase from step (f) is washed after a stabilisation step which eliminates the volatile compounds contained therein.

5. A process according to any one of claims 1 to 4, **characterized in that** the solvent is selected from methanol, ethanol, propanol, methylpropylether, ethylpropylether, dipropylether, methyltertiobutylether, dimethoxymethane, dimethoxyethane and methoxyethanol.

6. A process according to any one of claims 1 to 5, **characterized in that** the solvent is methanol.

7. A process according to any one of claims 1 to 6, **characterized in that** the recycled aqueous phase sent to step (d) contains 40% to 90% by weight of solvent.

8. A process according to any one of claims 1 to 7, **characterized in that** the temperature of the gas phase at the end of step (g) is in the range -5°C to -100°C.

9. A process according to any one of claims 1 to 8, **characterized in that** the fraction of gas traversing the contact zone in step (d) represents 10% to 50% of the total gas.

10. A process according to any one of claims 1 to 9, **characterized in that** it further comprises a step for washing the liquid hydrocarbon phase before recovering the solvent.

11. A process according to claim 10, **characterized in that** said washing step is carried out using mixer settlers.

12. A process according to claim 10, **characterized in that** said washing step is carried out by contact in a column.

13. A process according to claims 1 to 12, **characterized in that** the fraction (2) sent to the contact zone with the aqueous phase from step (h) is pre-heated.

## Patentansprüche

1. Verfahren zur Behandlung eines Gases, das Methan, Wasser sowie wenigstens einen schwereren Kohlenwasserstoff als Methan enthält, mit dem Ziel, wenigstens einen Teil des Gases von Wasser sowie von schwereren Kohlenwasserstoffen als Methan zu befreien, **dadurch gekennzeichnet, dass** es die folgenden Stufen umfasst:
a) man teilt das zu behandelnde Gas in zwei Fraktionen (1) und (2);
b) man kühlt die Fraktion (1), wobei diese Kühlung die Kondensation einer wässrigen flüssigen Phase und einer flüssigen Phase höherer Kohlenwasserstoffe einleitet;
c) man trennt die aus der Kühlstufe (b) stammenden Phasen;
d) man bringt die Fraktion von zu behandelndem Gas (2) aus der Trennstufe (a) mit einer wässrigen, ein Lösungsmittel umfassenden Phase in einer Kontaktzone in Kontakt, das in der wässrigen Phase enthaltene Lösungsmittel wird durch das Gas extrahiert, das aus dieser Stufe (d) mit Lösungsmittel beladen ist und die wässrige, wenigstens teilweise vom Lösungsmittel befreite Phase wird am Boden der Kontaktzone abgezogen;
e) man liefert dem System einen Lösungsmittelzusatz;
f) man kühlt die gasförmigen aus den Stufen (c) und (d) stammenden Fraktionen in Gegenwart des Lösungsmittels, getrennt oder wenigstens teilweise in Mischung, derart, dass eine wässrige, Lösungsmittel umfassende Phase sowie eine flüssige Kohlenwasserstoffphase teilweise kondensiert wird;
g) man trennt das behandelte, wenigstens teilweise von Wasser sowie von höheren Kohlenwasserstoffen, die es enthielt, befreite Gas, die wässrigen Phasen und die flüssige Kohlenwasserstoffphase aus der Kühlstufe (f);
h) man rezykliert wenigstens teilweise die wässrige, das Lösungsmittel umfassende Phase aus der Stufe (g) zur Kontaktstufe (d).

2. Verfahren nach Anspruch 1, **dadurch gekennzeichnet, dass** die flüssige Kohlenwasserstoffphase aus der Stufe (g) mit einer wässrigen Phase, die wenigstens zum Teil aus der Stufe (c) kommt, in Kontakt gebracht wird, um wenigstens zum Teil das Lösungsmittel, das sie enthält, zu entfernen.

3. Verfahren nach Anspruch 2, **dadurch gekennzeichnet, dass** die wässrige, das Lösungsmittel aus der Kontaktstufe umfassende Phase zum Eingang der Kühlstufe (d) und/oder der Kontaktstufe (d) rezykliert wird.

4. Verfahren nach einem der Ansprüche 1 bis 3, **dadurch gekennzeichnet, dass** das Waschen der flüssigen Kohlenwasserstoffphase aus der Stufe (f) nach einer Stabilisierungsstufe durchgeführt wird, die es ermöglicht, die flüchtigen Verbindungen, die sie enthält, zu entfernen.

5. Verfahren nach einem der Ansprüche 1 bis 4, **dadurch gekennzeichnet, dass** das Lösungsmittel unter Methanol, Ethanol, Propanol, Methylpropylether, Ethylpropylether, Dipropylether, Methyl-tert.-Butylether, Dimethoxymethan, Dimethoxyethan und Methoxyethanol gewählt wird.

6. Verfahren nach einem der Ansprüche 1 bis 5, **dadurch gekennzeichnet, dass** das Lösungsmittel Methanol ist.

7. Verfahren nach einem der Ansprüche 1 bis 6, **dadurch gekennzeichnet, dass** die wässrige rezyklierte zur Vorstufe (d) geschickte Phase 40 bis 90 Gew.-% Lösungsmittel enthält.

8. Verfahren nach einem der Ansprüche 1 bis 7, **dadurch gekennzeichnet, dass** die Temperatur der Gasphase aus der Stufe (g) zwischen -5° und -100°C liegt.

9. Verfahren nach einem der Ansprüche 1 bis 8, **dadurch gekennzeichnet, dass** die Gasfraktion, die die Kontaktzone der Stufe (d) durchläuft, 10 bis 50% der Gesamtheit des Gases darstellt.

10. Verfahren nach einem der Ansprüche 1 bis 9, **dadurch gekennzeichnet, dass** es im übrigen eine Waschstufe der flüssigen Kohlenwasserstoffphase umfasst, um davon das Lösungsmittel zu gewinnen.

11. Verfahren nach Anspruch 10, **dadurch gekennzeichnet, dass** die Waschstufe durch den Einsatz von Mischabsetzern durchgeführt wird.

12. Verfahren nach Anspruch 10, **dadurch gekennzeichnet, dass** die Waschstufe durch Kontakt in einer Kolonne verwirklicht wird.

13. Verfahren nach einem der Ansprüche 1 bis 12, **dadurch gekennzeichnet, dass** die Fraktion (2), die mit der wässrigen, von der Stufe (h) kommenden, Phase zur Kontaktzone geschickt wird, vorgewärmt wird.
